# EUROPÄISCHE PATENTSCHRIFT

(11) **EP 2 681 291 B1**
(45) Veröffentlichungstag und Bekanntmachung des Hinweises auf die Patenterteilung: **04.11.2015**
(21) Anmeldenummer: 12706834.4
(22) Anmeldetag: 29.02.2012
(51) Int. Cl.: C09K 8/72, C09K 8/92

(54) **ALKANSULFONSÄURE-MIKROKAPSELN UND IHRE VERWENDUNG BEI TIEFBOHRUNGEN**
ALKANESULPHONIC ACID MICROCAPSULES AND USE THEREOF IN DEEP WELLS
MICROCAPSULES D'ACIDE ALCANSULFONIQUE ET LEUR UTILISATION LORS DE FORAGES PROFONDS

(30) Priorität: 02.03.2011 EP 11156544
(43) Veröffentlichungstag der Anmeldung: 08.01.2014
(73) Patentinhaber: BASF SE, 67056 Ludwigshafen (DE)
(72) Erfinder: BERTKAU, Walter, 67069 Ludwigshafen (DE); STEIDL, Norbert, 83361 Kienberg (DE)
(86) Internationale Anmeldenummer: PCT/EP2012/053402
(87) Internationale Veröffentlichungsnummer: WO 2012/117007

(56) Entgegenhaltungen:
- EP-A1- 1 151 741
- EP-A1- 1 428 571
- WO-A1-00/75486
- WO-A1-2006/092438
- DE-A1- 4 339 801
- DE-A1-102005 010 564
- US-A- 4 036 301
- US-A1- 2003 221 831

## Beschreibung

Die Erfindung betrifft Alkansulfonsäure-Mikrokapseln und deren Verwendung als Additiv für Säuerungsapplikationen, insbesondere zur Erhöhung der Permeabilität von unterirdischen, carbonatischen erdöl-, erdgas und/oder heißes Wasser führenden Gesteinsformationen und zum Lösen von carbonatischen und/oder carbonathaltigen Verunreinigungen bei der Förderung von Erdöl und/oder Erdgas oder der Energiegewinnung durch hydrothermale Geothermie. Weiterer Gegenstand der Erfindung ist eine saure Formulierung, enthaltend die erfindungsgemäßen Mikrokapseln, und deren Verwendung zu dem vorgenannten Zweck sowie ein entsprechendes Verfahren.

Bei der Erdöl- oder Erdgasgewinnung werden erdöl- und/oder erdgasführende Gesteinsformationen und bei der Energiegewinnung durch hydrothermale Geothermie werden heißes Wasser führende Gesteinsformationen, sogenannte Aquifere, angebohrt. Typische Gesteinsformationen umfassen Sandsteinformationen und/oder Carbonatformationen. Bei Sandsteinformationen sind die silikatischen Mineralpartikel häufig in einer carbonatischen Matrix eingebettet. Hierbei wurden die primär vorhandenen Räume zwischen den Mineralkörnern unter späteren geologischen Bedingungen diagenetisch mit Carbonaten zementiert. Selbstverständlich können auch die durch reine chemische Fällungsreaktionen entstandenen carbonatischen Gesteinsformationen gewisse feinkörnige Silikatanteile aufweisen.

Das Erdöl, Erdgas und/oder das heiße Wasser, im folgenden als das zu fördernde Medium bezeichnet, bewegt sich aufgrund der Differenz zwischen dem Druck in der Formation und dem Druck im Bohrloch durch Klüfte und miteinander verbundene Poren zum Bohrloch hin, und wird von dort an die Oberfläche gefördert. Der Druck in der Formation ist in den überwiegenden Fällen hydrostatischen Ursprungs und kann durch Einpressen von üblicherweise flüssigen Medien durch Injektionsbohrungen künstlich aufrechterhalten werden.

Um eine wirtschaftliche Förderrate für das zu fördernde Medium zu gewährleisten, ist eine ausreichende Porosität der Gesteinsformation allein nicht ausreichend. Erst die Verknüpfung der Porenräume untereinander stellt die notwendige Permeabilität innerhalb der Gesteinsformation her. Häufig ist die natürliche Permeabilität der Trägerformation nicht ausreichend gegeben oder wurde ungewollt im Umkreis der Bohrung durch Additivpartikel der unvermeidlichen Bohrspülung durch Verstopfung reduziert. Zum Erhöhen bzw. zur Wiederherstellung der Permeabilität sind zwei Anwendungen bekannt: 1.) Das Säuerungsverfahren ("acidizing"), wobei eine Säure oder Säureformulierung mit moderatem Druck in die Trägerformation verpresst wird und durch die folgenden Lösevorgänge in der Trägerformation die Migrationswege wieder hergestellt und/oder erweitert werden. 2.) Der hydraulische Frac, bei dem mit sehr hohem Einpressdruck die Zielformation lateral hydraulisch aufgebrochen und gleichzeitig gesäuert wird (*"fracturing treatment" oder "fracturing"* genannt) und so das radial zur Bohrung verlaufende neu entstandene und gleichzeitig aufgeweitete Kluftnetzwerk als Drainage fungiert.

Zur Erschließung einer Geothermielagerstätte, dem Aquifer, werden im allgemeinen eine (oder mehrere) Entnahmebohrung(en) und eine (oder mehrere) Einpressbohrung(en), insgesamt als Cluster bezeichnet, im Richtbohrverfahren niedergebracht, deren Entfernungen untertage mehrere tausend Meter voneinander betragen können. Oberirdisch befindet sich dieser Cluster i.d.R. an einem Ort, dem späteren Betriebsgelände des Kraftwerkes.

Voraussetzung für eine effiziente Energiegewinnung durch die hydrothermale Geothermie, bei der das im Gestein in Klüften und Poren zirkulierende heiße Wasser gefördert, ihm die Energie entzogen und zuletzt wieder reinjiziert wird, ist eine möglichst hohe Permeabilität im Gestein, damit ein möglichst hoher konvektiver Wärmetransport durch das zirkulierende heiße Wasser gewährleistet ist. Bedingung für eine hydrothermale Nutzung ist also ein seitens der Förderrate leistungsfähiger und hinreichend heißer Aquifer. Zur Steigerung der Permeabilität und zur Flächenvergrößerung zwecks Erhöhung der Wärmeübertragung wird nicht nur die direkte Zone um das Bohrloch, sondern ein erheblicher Teil der betroffenen Formation "stimuliert", d.h. vorhandene natürliche Klüfte werden durch Säuerung erweitert und gegebenenfalls neue durch hydraulische Sprengungen erzeugt oder beides wird miteinander kombiniert. Auf diese Weise werden gesteigerte Zufluss-/Einpressraten erzielt. Bei den niederenthalpen Aquiferen liegen die Temperaturen des geförderten Fluids im Allgemeinen bei 100° C bis 160° C. Hochenthalpe Aquifere treten in Verbindung mit Vulkanismus schon in geringen Teufen auf (z.B. in Island, Indonesien, Japan etc.) und liefern mehrere hundert Grad heiße Fluide.

Lose verschwemmte Mineralpartikel oder mineralische Niederschläge aus den (mit)geförderten Formationswässern verstopfen gegebenenfalls bereits die Migrationswege innerhalb der Trägerformation oder die folgenden Förder- bzw. Prozessleitungssysteme und führen letztlich zu abnehmenden Förderraten. Diese Ablagerungen sind auf höhere Fließgeschwindigkeiten in der näheren Umgebung des Bohrlochs und/oder geänderte Druck-/Temperaturbedingungen im Förderstrom zurückzuführen. Typische Ablagerungen sind beispielsweise carbonatischen, sulfatischen oder auch sulfidischen Ursprungs. Finden diese Fällungsvorgänge beispielsweise innerhalb des Trägergesteins statt, wird die vorhandene Porosität förmlich zuzementiert und damit die Permeabilität der Gesteinsformation mithin dramatisch reduziert. Finden diese Fällungsreaktionen auf dem Weg zur Erdoberfläche oder beim Durchströmen der obertägigen Ausrüstung (Rohre, Wärmetauscher usw.) statt, reduzieren die mineralischen Belagsausfällungen massiv die Durchflussraten der Leitungssysteme und somit eine möglichst hohe Förderrate.

Es ist bekannt, derartige sekundäre Verstopfungen im Bohrloch oder in der Formation durch eine Säurebehandlung zu lösen (auch *"acidizing treatment"* oder *"acidizing"* genannt). Weiterhin können durch eine Säurebehandlung auch neue Klüfte bzw. Poren in der Formation geschaffen werden. Nähere Einzelheiten hierzu sind beispielsweise in Ullmann's Encyclopedia of Industrial Chemistry, 6th Edt., 2000 Electronic Release, "Ressources of Oil and Gas, 3.4.2. General Production Engineering*"* dargestellt.

Als Säuren für die Säurebehandlung werden je nach Trägergestein beispielsweise wässrige Lösungen von HF und/oder HCl eingesetzt. HF eignet sich hierbei naturgemäß für silikatische Formationen, und HCl wird insbesondere für carbonatische Formationen eingesetzt. Es ist aber auch schon die Verwendung organischer Säuren offenbart worden.

HCl ist aufgrund des hohen Dampfdruckes zum Einsatz bei höheren Temperaturen, die in großen Tiefen herrschen, im carbonatischen Gestein nur wenig geeignet Weiterhin ist HCl insbesondere bei höheren Temperaturen gegenüber den in einem Bohrloch eingesetzten Rohrstählen stark korrosiv und neigt ausgeprägt zur Lochfraßkorrosion. Darüber hinaus zeigt HCl eine sehr spontane, stark lokal ausgeprägte und wenig nachhaltige Reaktion mit dem Kalkgestein unter Bildung von säurehaltigen Hohlräumen mit nur noch wenig reaktivem Randkontakt zum Carbonat, so dass eine nachhaltige Wirkung in vom Bohrloch entfernten Regionen feiner Klüfte nicht erfolgen kann. Darüber hinaus schädigt die im Trägergestein nicht abreagierte, aufgeheizte Salzsäure während der Rückförderphase massiv die metallischen Steigstränge im Bohrloch durch Lochfraßkorrosion.

Alkansulfonsäuren, optional in Mischung mit anderen Säuren wie beispielsweise Amidosulfonsäure werden zum Entfernen von Kalkablagerungen insbesondere im Haushalt offenbart (WO 95/14641).

Um die durch HCl bedingten vorgenannten Nachteile zu vermeiden, wird in der WO 2006/092438 die Verwendung von Alkansulfonsäuren, bevorzugt Methansulfonsäure (MSA), zur Erhöhung der Permeabilität von unterirdischen, carbonatischen erdöl- und/oder erdgasführenden Gesteinsformationen, sowie zum Lösen von carbonatischen und/oder carbonathaltigen Verunreinigungen bei der Erdölförderung, insbesondere bei einer Temperatur von mindestens 100°C, vorgeschlagen.

Ein weiterhin bestehendes Problem bei der Lagerstättenstimulation ist, dass die Einwirkung der angewendeten Säure im allgemeinen nicht nachhaltig ist, da die Säure nur in den bohrlochnahen Bereichen der Gesteinsformation ihre volle Wirkung entfaltet und nicht oder nur unzureichend in den weiter entfernten Bereichen des Kluftsystems der Trägerformation. Ursache dafür ist z. B. die Bildung von säurehaltigen Kavernen in Folge eines lokalen Säureüberangebotes, wodurch heiße, nicht verbrauchte Säure beim Rückspülvorgang wieder zu Tage gefördert wird.

Aufgabe ist es daher eine Säure bzw. ein System auf Säurebasis bereitzustellen, die bzw. das eine kontrollierte, kontinuierliche und verzögerte Beizwirkung auf die Kluft- und Porenräume von unterirdischen, carbonatischen erdöl- und/oder erdgasführenden bzw. heißes Wasser führenden Gesteinsformationen bei Tiefbohrungen zur Erdöl-, Erdgas oder Heißwasserförderung gewährleistet und im Hinblick auf die metallische Bohrlochausrüstung kaum korrosiv ist.

Die Aufgabe wird durch die erfindungsgemäßen Alkansulfonsäure-Mikrokapseln gelöst, welche als Additiv für Säuerungsapplikationen, gegebenenfalls auch in Verbindung mit Fracbehandlungen, eingesetzt werden.

Gegenstand der Erfindung ist eine Mikrokapsel umfassend einen Kern und mindestens eine Schale, dadurch gekennzeichnet, dass der Kern aus mindestens einer Alkansulfonsäure der allgemeinen Formel

R¹-SO₃H ist,

worin
R¹ ein geradkettiger oder verzweigter C₁- bis C₄-Alkylrest ist und als Kern der Mikrokapsel wasserfreie Alkansulfonsäureeingesetzt wird; und die Schale aus mindestens einem synthetischen oder natürlichen Wachs, ausgewählt aus synthetischen Wachsen auf Basis von Polyethylen, Polypropylen oder Fischer-Tropsch-Wachsen, die gegebenenfalls chemisch modifiziert sein können, oder halb-synthetischen Wachsen wie Amidwachsen, Montanwachsen, Paraffinen und mikrokristallinen Wachsen oder natürlichen Wachsen wie Bienenwachs oder Carnaubawachs, oder auch Mischungen davon, besteht, und dass die Dichte der Mikrokapsel größer 1,0 g/cm³ ist.

Der Fachmann wählt den Rest R¹unter der Maßgabe, dass die Alkansulfonsäure noch eine ausreichende Löslichkeit in Wasser aufweisen soll.

Selbstverständlich können auch Gemische verschiedener Alkansulfonsäuren, die wie oben definiert sind, eingesetzt werden.

Besonders bevorzugt wird für den Kern der Mikrokapsel Methansulfonsäure (abgekürzt MSA, Formel: CH₃-SO₃H) eingesetzt. Methansulfonsäure ist eine starke Säure (pKₐ: - 2), weist aber im Gegensatz zu HCl oder Ameisensäure nur einen geringen Dampfdruck auf. Sie ist daher ganz besonders auch noch zum Einsatz bei höheren Temperaturen geeignet.

Als Kern der Mikrokapsel wird wasserfreie Alkansulfonsäure, insbesondere reine, 100% ige MSA, eingesetzt. Letztere ist im Handel erhältlich beispielsweise als Lutropur^{®} MSA 100. Die Verwendung von Alkansulfonsäure gelöst in Wasser (z.B. Lutropur® MSA (70 %ige Produktvariante) mit 30 % Wasser) und/oder alternativ in einem mit Wasser mischbaren organischen Lösemittel (z.B. Alkohol wie Methanol, Ethanol oder Propanol) wurde auch untersucht.

Die Schale kann sich aus einer oder mehreren Schalen zusammensetzen, wobei diese jeweils aus einem oder mehreren verschiedenen Wachsen aufgebaut sein können. Bevorzugt weist die Mikrokapsel eine Schale auf. Geeignete Wachse für das Schalenmaterial der erfindungsgemäßen Mikrokapseln sind synthetische Wachse auf Basis von Polyethylen, Polypropylen oder Fischer-Tropsch-Wachse, die gegebenenfalls chemisch modifiziert sein können, oder halb-synthetische Wachse wie Amidwachse, Montanwachse, Paraffine und mikrokristalline Wachse oder natürliche Wachse wie Bienenwachs oder Carnaubawachs, oder auch Mischungen davon. Bevorzugt sind Wachse ausgewählt aus Ethylenhomo- und copolymerwachsen, oxidierten Polyethylenwachsen. Polyetherwachsen sowie Montansäure- und Montanesterwachsen. Derartige Wachse sind beispielsweise im Handel als Luwax^{®} erhältlich. Die Schmelztemperaturen der vorgenannten Wachstypen liegen innerhalb des Bereichs von 30 bis 160°C, vorzugsweise 60 bis 135 °C, so dass der Fachmann das Schalenmaterial im Hinblick auf den Anwendungszweck auswählt.

Die erfindungsgemäßen Mikrokapseln (MC) besitzen Durchmesser von im Allgemeinen 100 µm bis 5000 µm, vorzugsweise bis 1000 µm; in klüftigen Systemen werden bevorzugt 250 bis 500 µm eingesetzt. Je größer eine Kapsel, desto höher ist das Verhältnis Kern/Schale. Da beispielsweise die Dichte von reiner wasserfreier MSA 1,48 g/cm³ beträgt, muss darauf geachtet werden, dass durch die spezifisch leichtere Wachsumhüllung die resultierende Dichte der Mikrokapseln größer 1,0 g/cm³, vorzugsweise größer 1,2 g/cm³, ist. Dadurch wird sichergestellt, dass bei der nachfolgend beschriebenen erfindungsgemäßen Verwendung der Mikrokapseln als Additiv zu Alkansulfonsäuren diese in wässrigen Medien bis in große Teufen optimal verpumpbar bleiben ohne das höhere Pumpenleistungen und/oder verlängerte Verweilzeiten im Säuerungsstrang erforderlich sind.

Die Herstellung der erfindungsgemäßen Mikrokapseln kann durch übliche Methoden (Simon Benita, Microencapsulaion, Methodsand Industrial Applications, 2005, 2nd Edition) wie Sprühbeschichtung, Emulsionspolymerisation, Coacervation, Sol-Gel-Verkapselung oder durch Coextrusion, d.h. durch Vertropfen des flüssigen Kern- und Schalenmaterials beispielsweise in einer Spherisator-Anlage mit Hilfe eines vibrierenden Doppeldüsensystems, erfolgen. Das letztere Verfahren ist bekannt (DE 4022648 A1) und zur Herstellung der erfindungsgemäßen Mikrokapseln besonders geeignet. Spherisator-Anlagen mit derartigen vibrierenden Doppeldüsensystemen sind ebenfalls bekannt und auf dem Markt beispielsweise von der Brace GmbH erhältlich.

Weiterer Gegenstand der Erfindung ist die Verwendung der erfindungsgemäßen Mikrokapseln als Additiv für Säuerungsapplikationen, gegebenenfalls auch in Verbindung mit Fracbehandlungen. Ebenfalls erfindungsgemäß sind saure Formulierungen, enthaltend die erfindungsgemäßen Mikrokapseln. Die erfindungsgemäßen sauren Formulierungen werden erfindungsgemäß zur Erhöhung der Permeabilität von unterirdischen, carbonatischen erdöl-, erdgas und/oder heißes Wasser führenden Gesteinsformationen und zum Lösen von carbonatischen und/oder carbonathaltigen Verunreinigungen bei der Förderung von Erdöl und/oder Erdgas oder der Energiegewinnung durch hydrothermale Geothermie verwendet.

Für die erfindungsgemäßen Säuerungsapplikationen und sauren Formulierungen können generell alle für den Verwendungszweck geeigneten Säuren oder deren wässrige Lösung als Basismedium verwendet werden. Derartige Säuren sind dem Fachmann bekannt. Beispielhaft seien als anorganische Säuren Salzsäure, Schwefelsäure oder Salpetersäure genannt und als organische Säuren wasserlösliche Carbonsäuren wie Ameisensäure und/oder Essigsäure, Citronensäure oder Alkan- und/oder Arylsulfonsäuren. Bevorzugt sind aus sicherheitstechnischen Aspekten Säuren, die keinen hohen Dampfdruck aufweisen.

Erfindungsgemäß wird vorzugsweise wasserlösliche Alkansulfonsäure als Basismedium für die Säuerungsapplikation verwendet. Selbstverständlich können auch Gemische verschiedener wasserlöslicher Alkansulfonsäuren eingesetzt werden. Die Alkansulfonsäure(n) weisen die bereits für die Kernkomponente aufgeführte allgemeine Formel R¹-SO₃H auf, und sind entsprechend definiert, wobei sie gleich oder verschieden von der Kernkomponente sein können.

Besonders bevorzugt wird für das Basismedium Methansulfonsäure eingesetzt.

Es kann/können reine, 100%ige Alkansulfonsäure(n), insbesondere reine, 100%ige MSA, als Basismedium verwendet werden. Bevorzugt wird aber eine saure, wässrige Lösung bzw. Formulierung der Alkansulfonsäure(n), insbesondere von MSA, eingesetzt. Bei dem Lösemittel handelt es sich bevorzugt um Wasser, es kann aber auch noch geringe Mengen organischer, mit Wasser mischbarer Lösemittel enthalten. Hierbei kann es sich insbesondere um Alkohole, beispielsweise Methanol, Ethanol oder Propanol handeln. In der Regel beträgt der Anteil von Wasser mindestens 80 Gew.-%, bevorzugt 90 Gew.-% und besonders bevorzugt mindestens 95 Gew.-%, jeweils bezogen auf die Gesamtmenge aller eingesetzten Lösemittel.

Die Konzentration des Basismediums wird vom Fachmann je nach dem gewünschten Anwendungszweck gewählt. Bewährt hat sich aber eine Konzentration von mindestens 5 Gew.-%, bevorzugt mindestens 10 Gew.-%, besonders bevorzugt mindestens 20 Gew.-% und ganz besonders bevorzugt mindestens 50 Gew.-%, jeweils bezogen auf die Summe aller Komponenten der Lösung bzw. Formulierung. Beispielsweise kann die Konzentration 65 bis 75 Gew.-% betragen.

Die oben definierte(n) Alkansulfonsäure(n), insbesondere MSA, kann/können erfindungsgemäß besonders vorteilhaft als einzige Säure(n) verwendet werden.

Selbstverständlich kann/können sie aber auch in Kombination mit anderen Säuren verwendet werden, wobei deren Anteil zum Erreichen einer möglichen synergistischen Wirkung vorzugsweise direkt am Gesteinsmaterial eines entsprechenden Bohrkerns des Trägergesteins zu ermitteln ist. Auch hierbei sollte wie bereits zuvor ausgeführt, insbesondere bei hohen Anwendungstemperaturen, auf leichtflüchtige Säuren verzichtet werden.

In einer weiteren, bevorzugten Ausführungsform der Erfindung kann die als Basismedium verwendete Säure, deren wässrige Lösung oder die erfindungsgemäße Formulierung in Kombination mit mindestens einem wasserlöslichen Korrosionsinhibitor eingesetzt werden. Dem Fachmann sind Korrosionsinhibitoren bekannt und er trifft eine geeignete Auswahl je nach dem gewünschten Anwendungszweck. Selbstverständlich können auch Mischungen verschiedener Korrosionsinhibitoren eingesetzt werden. Der Gehalt an Korrosionsinhibitor wird vom Fachmann je nach der gewünschten Anwendung gewählt und liegt üblicherweise unterhalb von 5 Vol.-%, bevorzugt weniger als 1 Vol.-% der Gesamtformulierung.

Beispiele geeigneter wasserlöslicher Korrosionsinhibitoren umfassen Alkin-Derivate, wie beispielsweise Propargylalkohol oder 1,4-Butindiol. Derartige und weitere geeignete Korrosionsinhibitoren sind beispielsweise unter dem Handelsnamen Korantin^{®} erhältlich.

Das Basismedium bzw. die erfindungsgemäße Formulierung kann darüber hinaus selbstverständlich noch übliche Zusatzstoffe und Hilfsmittel umfassen, die für eine Säurebehandlung von öl- bzw. gasführenden Gesteinsformationen typisch sind. Beispiele derartiger Hilfsmittel umfassen beispielsweise Polymere zur Erhöhung der Viskosität, Tenside, Schaumbildner oder Schaumbrecher, Oxidationsmittel, Enzyme, Hilfsmittel zum Reduzieren der Reibung oder zur Kontrolle von Paraffinausscheidungen sowie Biozide. Bevorzugt können als Hilfsmittel außerdem Komplexbildner wie Nitrilotriessigsäure (NTA), Ethylendiamintetraessigsäure (EDTA), Diethylenetriaminpentaessigsäure (DTPA), Hydroxyethylethylendiamintriessigsäure (HEDTA) oder Methylglycindiessigsäure (MGDA) eingesetzt werden. Der Gehalt an Zusatzstoffen wird vom Fachmann je nach der gewünschten Anwendung gewählt.

Die Temperaturen von in der Erdkruste eingebetteten Lagerstätten hängen vom geothermischen Gradienten ab, der in Mitteleuropa 3° C pro 100 Meter beträgt. Oberflächennahe Lagerstätten besitzen Temperaturen, die der durchschnittlichen Oberflächentemperatur entspricht. In Erdöllagerstätten reichen die Temperaturen bis zu 135° C herauf, in Erdgaslagerstätten werden Temperaturen bis zu 225° C erreicht. Somit können grundsätzlich die Temperaturen in Erdöl- und/oder Erdgaslagerstätten - je nach Teufe der Lagerstätte - sehr unterschiedlich ausfallen. Bei der Energiegewinnung durch hydrothermale Geothermie betragen die Temperaturen in niederenthalpen Lagerstätten 100 bis 160° C zu erreichen. In hochenthalpen Aquiferen treten Temperaturen von mehreren Hundert Grad auf.

Je nach Wahl des für die Schale der Mikrokapsel verwendeten Wachstyps lässt sich die Schmelztemperatur der Schale variabel einstellen, so dass das Öffnen der erfindungsgemäßen Mikrokapsel durch den Wachstyp in Abhängigkeit von der Temperatur in der Lagerstätte gesteuert oder "getriggert" (triggered release) werden kann. Erfindungsgemäß können die als Additiv zugesetzten Mikrokapseln unterschiedliche Triggertemperaturen für verschiedene Temperaturfenster in den Lagerstätten aufweisen.

Weiterhin kann die Mikrokapsel als solche mehrere Schalen mit jeweils verschiedenen Wachsen enthalten. Für den vorgenannten Anwendungszweck sollte die Schmelztemperatur des Wachses der jeweiligen Schale von der äußersten Schale zur innersten Schale zunehmen.

Gemäß einer bevorzugten Ausführungsform der Erfindung werden erfindungsgemäße Formulierungen eingesetzt, die Mischungen der erfindungsgemäßen Mikrokapseln enthalten und wobei die in der Mischung enthaltenen Mikrokapseln Schalen aus Wachsen mit unterschiedlichen Schmelztemperaturen aufweisen. Je nach Intensität des ersten Schrittes der Stimulation der Trägerformation mit dem Basismedium weist die Gesteinsformation einen um das Bohrloch konzentrisch verlaufenden und vom Bohrloch entfernungsabhängigen Temperaturgradienten auf. Anhand der dort herrschenden Temperaturen, die üblicherweise bei Tiefbohrungen exakt ermittelt werden, kann der Fachmann eine geeignete Mikrokapseladditivmischung auswählen und dadurch gezielt kaskadenartig und somit nachhaltig die Säuredosis auch in zum Bohrloch entfernt gelegenen Klüften und Poren des Gesteins steuern.

Bei der vorgenannten Ausführungsform weisen die in der Mischung enthaltenen erfindungsgemäßen Mikrokapseln verschiedene Wachse mit Ihren Jeweils typabhängigen Schmelztemperaturen innerhalb des Bereichs von 30 bis 160 °C auf. Diese diskreten Schmelztemperaturen werden auch als Triggertemperaturen bezeichnet, da die Mikrokapsel durch einen thermischen Trigger, der, je nach Wachstyp individuell, das Schmelzen des jeweiligen Schalenmaterials auslöst, gezielt ihren Inhalt, d.h. die Kernkomponente, freigibt. Der Trigger ist bei der vorliegenden Anwendung die in der Gesteinsformation und deren Umgebung herrschende Temperatur. Die vorgenannte Mischung bzw. Formulierung weist im Allgemeinen mehrere der folgenden Triggerbereiche auf: 30-60°C, 60-70°C, 90-100°C, 110-120°C, 130-135°C und 140-160°C. Gemäß einer weiteren Ausführungsform weist die vorgenannte Mischung bzw. Formulierung zwei oder mehrere der folgenden Triggerbereiche auf: 30-60°C, 60 - 90°C, 90-120°C und 120-135°C.

Der Begriff "carbonatische Gesteinsformation" Ist dem Fachmann prinzipiell bekannt und beschreibt im Allgemeinen die heute in Mitteleuropa ebenfalls übertage anstehenden Kalksteine z.B. des triassischen Muschelkalks, der Schwäbischen und Fränkiden Kalksteine z.B. des triassischen Muschelkalks, der Schwäbischen und Fränkischen Alp, dem Schweizer und Französischen Jura sowie den nördlichen und südlichen Kalkalpen. Carbonatische Gesteinsformationen können biogenen, evaporitischen (Ausfällung aus übersättigten Lösungen) oder klastischen (umgelagerte Carbonatkörner) Ursprungs sein und enthalten im Wesentlichen CaCO₃ oder CaMg(CO₃)₂ in der mineralischen Form von Calcit, Aragonit oder Dolomit und ggf. auch Magnesit. Daneben können selbstverständlich noch beliebig andere mineralische Carbonatverbindungen als Beimengung vorhanden sein oder auch klastische Verunreinigungen z.B. silikatischen Ursprunges.

"Carbonatische Gesteinsformationen" können bei der Entstehung primär von einem sehr hohen Porenanteil durchsetzt sein (Beispiel: Riffkomplexe der Norditalienischen Dolomiten), können durch spätere Lösungsreaktionen im Formationswasserkreislauf weit geklüftet sein (Karstgebiete) oder durch geotektonische Überprägung über weite Strecken intensiv zerbrochen sein (Kluftbildung der Malmkalke im Untergrund der Bayrischen Molasse). Diese variablen Eigenschaften des Kalkgesteins machen derartige Formationen zu außergewöhnlich guten potenziellen Speichergesteinen, sowohl auf dem Gebiet der Erdöl-/Erdgasgewinnung, wie auch der Geothermie.

Der Begriff "carbonatische Gesteinsformation" soll auch carbonathaltige Gesteinsformationen umfassen, bei denen typische klastische Mineralkörner den Hauptbestandteil bilden, und Carbonate erst in einem späteren, diagenetischen Prozess in den ehemaligen verbliebenen Porenräumen eine zementierende kristalline Matrix bilden. Ein Beispiel dafür ist carbonatisch gebundener, ansonsten überwiegend silikatischer Sandstein (bspw. das Baumaterial des Kölner Doms).

Bei "carbonatischen und/oder carbonathaltigen Verunreinigungen bei der Erdölförderung" handelt es sich um an sich unerwünschte Ablagerungen derartiger Materialien, die in allen Stadien der Erdölförderung von der Formation bis zu den Erdölabfüllanlagen auftreten können. Hierbei kann es sich beispielsweise um durch Druck- oder Temperaturschwankungen ausgelöste mineralische Ausfällungen aus den gesättigten Formationswässern der Trägerformation handeln. Beispiele dafür sind carbonatische oder sulfatische Ablagerungen natürlichen Ursprungs auf Kluftoberflächen oder in Porenräumen der Formation. Künstliche Verunreinigungen sind beispielsweise CaCO₃haltige Filterkuchenrückstände, die während des Bohrvorganges unvermeidlich in die Formation eingeschleppt werden, und die nach dem Bohrvorgang und vor dem Beginn der Förderung wieder entfernt werden müssen. Bei den von Verunreinigungen betroffenen Formationen muss es sich nicht um carbonatische Formationen handeln, sondern es kann sich beispielsweise auch um silikatische Formationen handeln, die von mineralisch gesättigten Formationswässern durchströmt werden.

Carbonatische und/oder carbonathaltige Verunreinigungen können im Zuge der Förderung, insbesondere der hydrothermen Erdwärme oder auch des Erdöls, auch außerhalb einer Trägerformation entstehen, nämlich überall dort, wo eine Druck- und/oder Temperaturänderung für eine Übersättigung einer wässrigen Lösung sorgt. Zu nennen sind hier insbesondere die Förderstränge von Produktionsbohrungen, übertägige Anlagen am Ort der Förderung, wie beispielsweise Wasser/Öl-Trennanlagen, Rohrleitungen, Wärmetauscher oder dergleichen.

Weiterer Gegenstand der Erfindung ist ein Verfahren zur Erhöhung der Permeabilität von unterirdischen, carbonatischen erdöl-, erdgas und/oder heißes Wasser führenden Gesteinsformationen und zum Lösen von carbonatischen und/oder carbonathaltigen Verunreinigungen bei der Förderung von Erdöl und/oder Erdgas oder der Energiegewinnung durch hydrothermale Geothermie, bei dem man eine saure Formulierung durch mindestens eine Bohrung in die Gesteinsformation einpresst, dadurch gekennzeichnet, dass die saure Formulierung die erfindungsgemäßen Mikrokapseln enthält.

Besonders vorteilhaft wird bei dem erfindungsgemäßen Verfahren in einem ersten Schritt eine Säure, deren wässrige Lösung oder Formulierung durch mindestens eine Bohrung in die Gesteinsformation eingepresst, und dann kontinuierlich in einem zweiten Schritt durch dieselbe(n) Bohrung(en) die erfindungsgemäße saure Formulierung enthaltend die erfindungsgemäßen Mikrokapseln eingepresst.
Die beiden Schritte des erfindungsgemäßen Verfahrens erfolgen unmittelbar aufeinander.

Für die bei dem ersten Schritt des erfindungsgemäßen Verfahrens verwendete Säure können generell alle für den vorgenannten Verwendungszweck geeigneten Säuren oder deren wässrige Lösung verwendet werden. Vorteilhaft verwendet man bei dem erfindungsgemäßen Verfahren im ersten Schritt die gleiche Säure, die auch im zweiten Schritt als Basismedium dient. Bevorzugt wird bei dem erfindungsgemäßen Verfahren eine saure Lösung oder Formulierung basierend auf Alkansulfonsäure(n) oder einer wässrigen, Alkansulfonsäure(n) enthaltenden Formulierung als Basismedium verwendet.

Die Bohrung erfolgt in prinzipiell bekannter Art und Weise. Hierbei kann es sich um eine Produktionsbohrung handeln oder auch um eine Injektionsbohrung. Bei der Produktionsbohrung handelt es sich um eine Bohrung, durch die Erdöl bzw. Erdgas oder heißes Wasser entnommen wird. Bei der Öl- und Gasexploration dienen ehemalige Produktionsbohrungen gegebenenfalls auch dedizierte Injektionsbohrungen zum Einpressen von Flutmedien u.a. zur Aufrechterhaltung des Drucks in der Lagerstätte. Bei der hydrothermalen Geothermie werden im Allgemeinen erhebliche Mengen Wasser gefördert, die nicht unwesentliche Anteile gelöster Stoffe enthalten. Um die Nachhaltigkeit dieser Methode der Energiegewinnung zu gewährleisten, sollte die Rückführung des entnommenen Mediums in seine Ursprungsformation über entsprechend dimensionierte Injektionsbohrungen sichergestellt sein. Der Energieverbrauch bei hohen Injektionspumpleistungen verringert nun jedoch den energetischen Wirkungsgrad der Gesamtanlage über Jahre hinweg. Eine erfindungsgemäße Säurebehandlung der Injektionsbohrung verringert durch Öffnen der untertägigen Migrationswege die aufzuwendende Energie beim Einpressen des abgekühlten Formationswassers und trägt somit vorteilhaft zu einem höheren Wirkungsgrad und somit höherer Produktivität bei.

Bei der erfindungsgemäßen Säurebehandlung werden Klüfte und Poren in der carbonatischen Formation aufgeweitet und/oder carbonatische und/oder carbonathaltige Verunreinigungen gelöst.

Sofern nur Verunreinigungen in einer Produktions- und/oder Injektionsbohrung gelöst werden sollen, ist es ausreichend, die Bohrung mit der erfindungsgemäßen sauren Formulierung zu behandeln.

Die Einwirkzeit wird vom Fachmann je nach den lokalen Gegebenheiten an der jeweiligen Bohrstelle bestimmt. Sie ist beispielsweise abhängig von der Art der Formation bzw. der zu entfernenden Beläge und/oder Verunreinigungen und der Konzentration der Säure. Die Einwirkzeit kann wenige Minuten bis zu mehrere Tage betragen.

Das erfindungsgemäße Verfahren kann bei den oben genannten Ausführungsformen auch vorteilhaft mit einer hydraulischen Sprengung der Formation verbunden werden (hydraulischer Frac). Hierbei kann zunächst eine Sprengung der Formation mit einem beliebigen Flutmedium vorgenommen werden. Die hydraulische Sprengung kann aber auch mit der erfindungsgemäßen sauren Formulierung selbst vorgenommen werden. Ob eine einfache Säurebehandlung ohne hydraulische Sprengung der Formation oder eine kombinierte Sprengung/Säurebehandlung (Säuerungsfrac) erfolgt, kann vom Fachmann in prinzipiell bekannter Art und Weise durch Wahl des Drucks bestimmt werden, mit der die saure Formulierung in die Formation eingepresst wird.

Bei der bevorzugten Variante des erfindungsgemäßen Verfahrens in 2 Schritten, erfolgt die Zugabe der erfindungsgemäßen sauren Formulierung erst nachdem durch die Säure oder Säureformulierung gemäß Schritt 1 die Gesteinsformation im nahen Bohrlochbereich freigesäuert wurde und sich Kluftwege erweitert und im weiter entfernten Trägerbereich neue zusätzliche Kluftwege geöffnet haben. Im Allgemeinen wird bei einer derartigen Stimulierung durch die nicht unerhebliche Menge verpumpter (kalter) Säure- oder Säureformulierung gemäß Schritt 1 die Bohrlochausrüstung (Tubings und Teile der Verrohrung) sowie die Gesteine der direkten Bohrlochumgebung in der Trägerformation signifikant abgekühlt. Die dadurch stattfindende Ausbildung des bereits erwähnten konzentrischen Temperaturgradienten im Nahbereich der Bohrung ermöglicht den Einsatz der erfindungsgemäßen Mikrokapseln, denn der damit verbundene thermische Trigger lässt sich in dieser Umgebung entsprechend nutzen. Eine erfindungsgemäße Mischung der Mikrokapseln mit unterschiedlichen Triggertemperaturen ermöglicht die bereits erwähnte kaskadenartige Freisetzung des Kapselinhaltes. Während der fortschreitenden Verpumpung des Basismediums (Schritt 1) können die erfindungsgemäßen Mikrokapseln beispielsweise in einem Seitenstrom mittels einer Membranpumpe dem Hauptstrom kontinuierlich zudosiert (Schritt 2) werden. Der Fachmann wählt die Menge des Basismediums mit dem die erfindungsgemäßen Mikrokapseln verpumpt werden so aus, dass diese möglichst weit in die Trägerzone eingebracht werden können.

Durch das erfindungsgemäße Verfahren, besonders in seiner bevorzugten Variante in 2 Schritten, wird gewährleistet, dass sich die erfindungsgemäßen Mikrokapseln erst dann öffnen, wenn die erfindungsgemäße saure Formulierung Zonen mit der entsprechenden Triggertemperatur(en) erreicht und so die darin enthaltene(n) Alkylsulfonsäure(n) untertage kontinuierlich in das Gemisch aus Formationswasser der Gesteinsformation und dem auf diese Weise verdünnten Basismedium freigesetzt wird. Die Säure wird also nicht bereits in der Rohrleitung oder der bohrlochnahen Carbonatformation freigesetzt. Somit ermöglichen die erfindungsgemäßen Alkansulfonsäure-Mikrokapseln durch ihre erfindungsgemäße Verwendung eine kontrollierte, kontinuierliche und verzögerte Beizwirkung auf die Kluft- und Porenräume von unterirdischen, carbonatischen erdöl- und/oder erdgasführenden bzw. heißes Wasser führenden Gesteinsformationen bei Tiefbohrungen zur Erdöl-, Erdgas oder Heißwasserförderung und bieten darüber hinaus den Vorteil im Hinblick auf die metallische Bohrlochausrüstung kaum korrosiv zu sein.

## Patentansprüche

1. Mikrokapsel umfassend einen Kern und mindestens eine Schale, **dadurch gekennzeichnet, dass** der Kern aus mindestens einer Alkansulfonsäure der allgemeinen Formel
R¹-SO₃H ist,
worin
R¹ ein geradkettiger oder verzweigter C₁- bis C₄-Alkylrest ist, und als Kern der Mikrokapsel wasserfreie Alkansulfonsäure eingesetzt wird; und
die Schale aus mindestens einem synthetischen oder natürlichen Wachs ausgewählt aus synthetischen Wachsen auf Basis von Polyethylen, Polypropylen oder Fischer-Tropsch-Wachsen, die gegebenenfalls chemisch modifiziert sein können, oder halb-synthetischen Wachsen wie Amidwachsen, Montanwachsen, Paraffinen und mikrokristallinen Wachsen oder natürlichen Wachsen wie Bienenwachs oder Carnaubawachs, oder auch Mischungen davon, besteht, und die Dichte der Mikrokapsel größer 1,0 g/cm³ ist.

2. Verwendung von Mikrokapseln gemäß Anspruch 1 als Additiv für Säuerungsapplikationen in carbonatischen Gesteinsformationen.

3. Saure Formulierung, enthaltend Mikrokapseln gemäß Anspruch 1.

4. Saure Formulierung gemäß Anspruch 3, **dadurch gekennzeichnet, dass** Mischungen von Mikrokapseln gemäß Anspruch 1 eingesetzt werden, welche Wachse mit unterschiedlichen Schmelztemperaturen aufweisen.

5. Formulierung gemäß Anspruch 4, **dadurch gekennzeichnet, dass** die Mischung Wachse mit mehreren der folgenden Schmelztemperaturbereichen aufweist: 30-60°C, 60-70°C, 90-100°C, 110-120°C, 130-135°C und 140-160°C.

6. Verwendung einer Formulierung gemäß einem der Ansprüche 3 bis 5 zur Erhöhung der Permeabilität von unterirdischen, carbonatischen erdöl- und/oder erdgasführenden und/oder hydrothermalen Gesteinsformationen und zum Lösen von carbonatischen und/oder carbonathaltigen Verunreinigungen bei der Förderung von Erdöl und/oder Erdgas und/oder der Energiegewinnung durch hydrothermale Geothermie.

7. Verfahren zur Erhöhung der Permeabilität von unterirdischen, carbonatischen erdöl- und/oder erdgasführenden und/oder hydrothermalen Gesteinsformationen und zum Lösen von carbonatischen und/oder carbonathaltigen Verunreinigungen bei der Förderung von Erdöl und/oder Erdgas oder der Energiegewinnung durch hydrothermale Geothermie, bei dem man eine saure Formulierung gemäß einem der Ansprüche 3 bis 5 durch mindestens eine Bohrung in die Gesteinsformation einpresst.

8. Verfahren gemäß Anspruch 7, **dadurch gekennzeichnet, dass** man in einem zusätzlichen ersten Schritt eine Säure, deren wässrige Lösung oder Formulierung durch mindestens eine Bohrung in die Gesteinsformation einpresst, und dann kontinuierlich in einem zweiten Schritt durch dieselbe(n) Bohrung(en) die saure Formulierung gemäß einem der Ansprüche 3 bis 5 einpresst

9. Verfahren gemäß Anspruch 7 oder 8, **dadurch gekennzeichnet, dass** man das Verfahren in Kombination mit einer hydraulischen Sprengung der Gesteinsformation durchführt.

## Claims

1. A microcapsule comprising a core and at least one shell, wherein the core is composed of at least one alkanesulfonic acid of the general formula
R¹-SO₃H,
in which
R¹ is a straight-chain or branched C₁- to C₄-alkyl radical, and anhydrous alkanesulfonic acid is used as the core of the microcapsule; and
the shell consists of at least one synthetic or natural wax selected from synthetic waxes based on polyethylene, polypropylene, or Fischer-Tropsch waxes which may optionally be chemically modified, or semisynthetic waxes such as amide waxes, montan waxes, paraffins and microcrystalline waxes or natural waxes, such as beeswax or carnauba wax, or else mixtures thereof, and the density of the microcapsule is greater than 1.0 g/cm³.

2. The use of microcapsules according to claim 1 as an additive for acidizing applications in carbonatic rock formations.

3. An acidic formulation comprising microcapsules according to claim 1.

4. The acidic formulation according to claim 3, wherein mixtures of microcapsules according to claim 1 are used, which comprise waxes with different melting points.

5. A formulation according to claim 4, wherein the mixture has waxes having a plurality of the following melting point ranges: 30-60°C, 60-70°C, 90-100°C, 110-120°C, 130-135°C and 140-160°C.

6. The use of a formulation according to any of claims 3 to 5 for increasing the permeability of underground carbonatic mineral oil- and/or natural gas-bearing and/or hydrothermal rock formations and for dissolving carbonatic and/or carbonate-containing impurities in the production of mineral oil and/or natural gas and/or geothermal power generation.

7. A process for increasing the permeability of underground carbonatic mineral oil- and/or natural gas-bearing and/or hydrothermal rock formations and for dissolving carbonatic and/or carbonate-containing impurities in the production of mineral oil and/or natural gas or geothermal power generation, in which an acidic formulation according to any of claims 3 to 5 is injected into the rock formation through at least one well.

8. The process according to claim 7, wherein, in an additional first step, an acid or aqueous solution or formulation thereof is injected into the rock formation through at least one well, and then the acidic formulation according to any of claims 3 to 5 is injected continuously in a second step through the same well (s) .

9. The process according to claim 7 or 8, wherein the process is carried out in combination with hydraulic fracturing of the rock formation.

## Revendications

1. Microcapsule comprenant un noyau et au moins une enveloppe, **caractérisée en ce que** le noyau est à base d'au moins un acide alcanesulfonique de formule générale
R¹-SO₃H,
dans laquelle
R¹ est un radical alkyle en C₁-C₄ à chaîne droite ou ramifié, et on utilise comme noyau de la microcapsule un acide alcanesulfonique anhydre ; et l'enveloppe est constituée d'au moins une cire naturelle ou synthétique, choisie parmi des cires synthétiques à base de polyéthylène, polypropylène ou des cires de Fischer-Tropsch, qui peuvent éventuellement être chimiquement modifiées, ou des cires semi-synthétiques telles que des cires d'amides, des cires de lignite, des paraffines et des cires microcristallines ou des cires naturelles telles que la cire d'abeille ou la cire de carnauba, ou bien des mélanges de celles-ci, et la densité de la microcapsule est supérieure à 1,0 g/cm³.

2. Utilisation de microcapsules selon la revendication 1, en tant qu'additif pour des applications d'acidification dans des formations rocheuses carbonatées.

3. Composition acide, contenant des microcapsules selon la revendication 1.

4. Composition acide selon la revendication 3, **caractérisée en ce qu'**on utilise des mélanges de microcapsules selon la revendication 1, qui comportent des cires à différentes températures de fusion.

5. Composition selon la revendication 4, **caractérisée en ce que** le mélange comporte des cires ayant plusieurs des domaines de température de fusion suivants : 30-60 °C, 60-70 °C, 90-100 °C, 110-120 °C, 130-135 °C et 140-160 °C.

6. Utilisation d'une composition selon l'une quelconque des revendications 3 à 5, pour l'augmentation de la perméabilité de formations rocheuses souterraines, carbonatées, hydrothermales et/ou pétrolifères et/ou gazéifères et pour la dissolution d'impuretés carbonatées et/ou contenant des carbonates dans l'extraction de pétrole et/ou de gaz naturel et/ou la production d'énergie par géothermie hydrothermale.

7. Procédé pour l'augmentation de la perméabilité de formations rocheuses souterraines, carbonatées, hydrothermales et/ou pétrolifères et/ou gazéifères et pour la dissolution d'impuretés carbonatées et/ou contenant des carbonates dans l'extraction de pétrole et/ou de gaz naturel ou la production d'énergie par géothermie hydrothermale, dans lequel on injecte sous pression une composition acide selon l'une quelconque des revendications 3 à 5 par au moins un puits de forage dans la formation rocheuse.

8. Procédé selon la revendication 7, **caractérisé en ce que** dans une première étape supplémentaire on injecte sous pression un acide, sa composition ou solution aqueuse par au moins un puits de forage dans la formation rocheuse, et ensuite on injecte sous pression en continu dans une deuxième étape par le(s) même(s) puits de forage la composition acide selon l'une quelconque des revendications 3 à 5.

9. Procédé selon la revendication 7 ou 8, **caractérisé en ce qu'**on effectue le procédé en combinaison avec une fracturation hydraulique de la formation rocheuse.
